Europäisches Patentamt

European Patent Office

Office européen des brevets

(19)

(11) Publication number: **0 151 365**
**A2**

(12) # EUROPEAN PATENT APPLICATION

(21) Application number: **84630221.4**

(22) Date of filing: **31.12.84**

(51) Int. Cl.⁴: **E 21 B 17/06**
**E 21 B 17/042, F 16 L 15/00**

(30) Priority: **23.01.84 US 573180**

(43) Date of publication of application:
**14.08.85 Bulletin 85/33**

(84) Designated Contracting States:
**FR GB IT**

(71) Applicant: **HUGHES TOOL COMPANY-USA**
**5425 Polk Avenue**
**Houston Texas 77023(US)**

(72) Inventor: **Farr, Albert Pike, Jr.**
**7017 Evans**
**Houston Texas 77061(US)**

(74) Representative: **Waxweiler, Jean et al,**
**OFFICE DENNEMEYER S.à.r.l. 21-25 Allée Scheffer**
**P.O.Box 41**
**L-2010 Luxembourg(LU)**

(54) **Pre-set torque limiter sub.**

(57) A pre-set torque limiter sub having a pin member and a box member. The pin member is connected to a section of drill pipe and has a pin connection at one end. The box member is connected to a second section of drill pipe. The pin connection and box connection are connected together. Whenever the torque on the sub exceeds a selected amount, the pin member and the box member can rotate with respect to one another. However, whenever the torque on the sub is below the selected amount, the pin member and the box member are held rigidly together.

EP 0 151 365 A2

./...

Croydon Printing Company Ltd.

Fig. 4

PRE-SET TORQUE LIMITER SUB                  0151365

This invention relates in general to shaft couplings, and in particular to connections between pipe sections in a drill string.

Oil and gas wells are drilled with a rock bit, which is mounted on the bottom of a drill string. The drill string, which may be several miles long, is a series of pipe sections, each about thirty feet long. The top of the drill string is rotated by a rotary table, and, as the drill string rotates, the rock bit is rotated to cut into the earth. During drilling, the torque required to rotate the drill string may increase for some reason, such as the sides of the hole collapsing. If the torque being applied to the drill string exceeds the makeup torque of the tool joints, downhole makeup may occur, producing stress which exceeds the yield strength of the tool joints between pipe sections, and the tool joints may be damaged, and may even become separated. The drill string must then be removed from the hole, which is a costly, time-consuming, and dangerous operation. If the bottom of the string is lost due to separation, an expensive fishing operation must be performed or the hole may have to be abandoned.

In order to prevent such damage, safety joints are sometimes inserted into the drill string at various intervals. A safety joint performs as a normal tool joint at normal torque, but when the torque becomes excessive, shear pins in the safety joint are sheared and the safety joint becomes a swivel coupling. Such safety joints are described in U.S. Patent No. 4,064,953 (Collins) and in U.S. Patent No. 1,414,207 (Reed).

After the shear pins in a safety joint have been sheared by excessive torque, the drill string must be removed from the hole, and the shear pins replaced, before normal rotary drilling can resume. Such an operation is expensive, time-consuming, and dangerous to personnel on the drilling platform.

In general object of the invention is to provide a pre-set torque limiter sub that will prevent damage to the drill string due to excessive torque, and yet will allow normal rotary drilling to resume after the torque has returned below the excessive level, without necessitating removal of the drill string from the hole.

In general the above object is accomplished by the provision of a torque limiter sub having a pin member and a box member. The pin member is connected to a section of drill pipe and has a pin connection at one end. The box member is connected to a second section of drill pipe and has a box connection at one end. The pin connection and the box connection can be connected together by means of threads or some other connection means.

Once the pin connection and the box connection have been connected, the pin member and the box member are held rigidly together whenever the torque on the sub is below a selected amount. This allows the sub to transmit the torque from one section of drill string to another, so that a rock bit at the bottom of the drill string can be rotated.

Whenever the torque on the sub exceeds a selected amount, the pin member and the box member are allowed to rotate with respect to one another. The selected amount of torque thus becomes a limit on the amount of torque which may be exerted on the drill string below the torque limiter sub.

Whenever the torque is reduced to an amount less than the selected amount, the pin member and the box member are once again held rigidly together. Drilling may then continue without the necessity of removing the torque limiter sub from the hole.

The above as well as additional objects, features, and advantages of the invention will become apparent in the following detailed description.

Fig. 1 is a side view, partially in section, of the pin member.

Fig. 2 is a perspective view of the split ring insert.

Fig. 3 is a side view, partially in section, of the pin member, the split ring insert, and the shot pins.

Fig. 4 is a side view, partially in section, of the pre-set torque limiter sub.

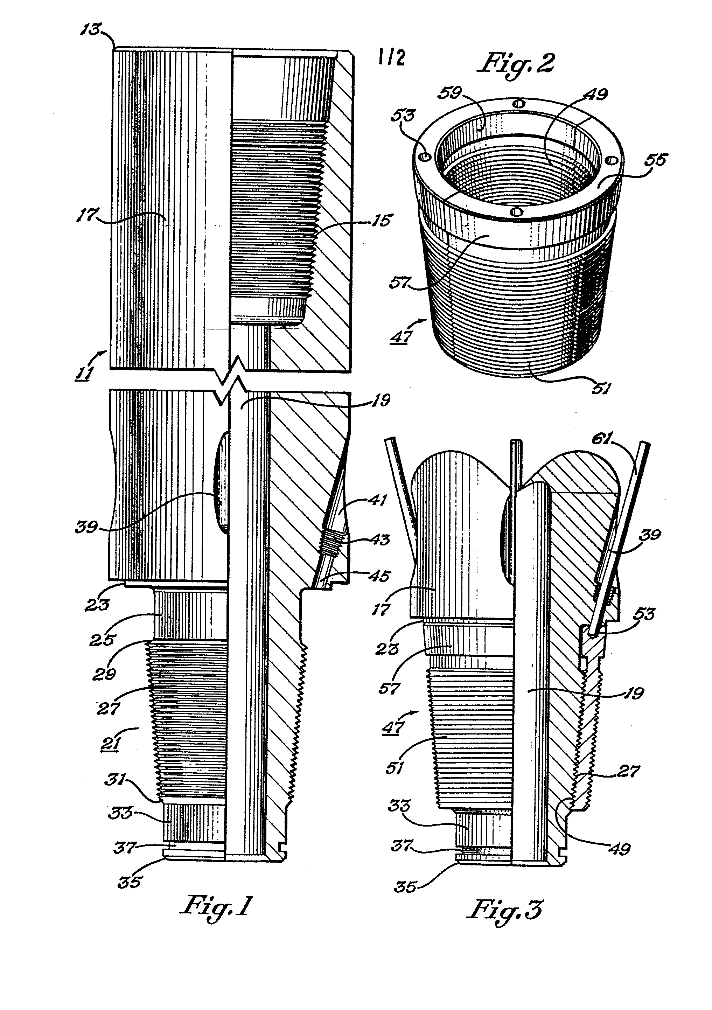

The pre-set torque limiter sub is a shaft coupling having a pin member and a box member. Fig. 1 illustrates the preferred embodiment of the pin member 11. The pin member 11 has a beveled upper end 13, and interior threads for connection to the lower end of a section of drill pipe (not shown). The pin member 11 has a cylindrical outer surface 17 and a cylindrical bore 19, which have the same diameters as the outer surface and the bore of the drill string, respectively.

The pin member 11 has, at its lower end, a pin connection 21. An annular shoulder 23 is located between the pin connection 21 and the cylindrical section 17 of the pin member 11. The diameter of the shoulder 23 is smaller than the diameter of the pin member 11, but larger than the diameter of the pin connection 21. Immediately below the annular shoulder 23, the pin connection 21 has a cylindrical section 25, which has a smaller diameter than the annular shoulder 23. Below the cylindrical section 25, the pin connection 21 has a plurality of concentric grooves 27. The grooved section 27 of the pin connection 21 tapers slightly from the upper end 29 of the grooved section 27 to the lower end 31. Below the grooved section 27, the pin connection 21 has a cylindrical nose 33. The nose 33 is beveled on the lower end 35, and has an annular groove 37.

The pin member 11 has four holes 39, evenly spaced around the outer surface 17. Each hole 39 slants downwardly from the outer surface 17 of the pin member 11, and exits between the annular shoulder 23 and the cylindrical section 25 of the pin connection 21. Each hole 39 has a cylindrical section 41 at the top, a threaded section 43 in the middle, and a smaller cylindrical section 45 at the bottom.

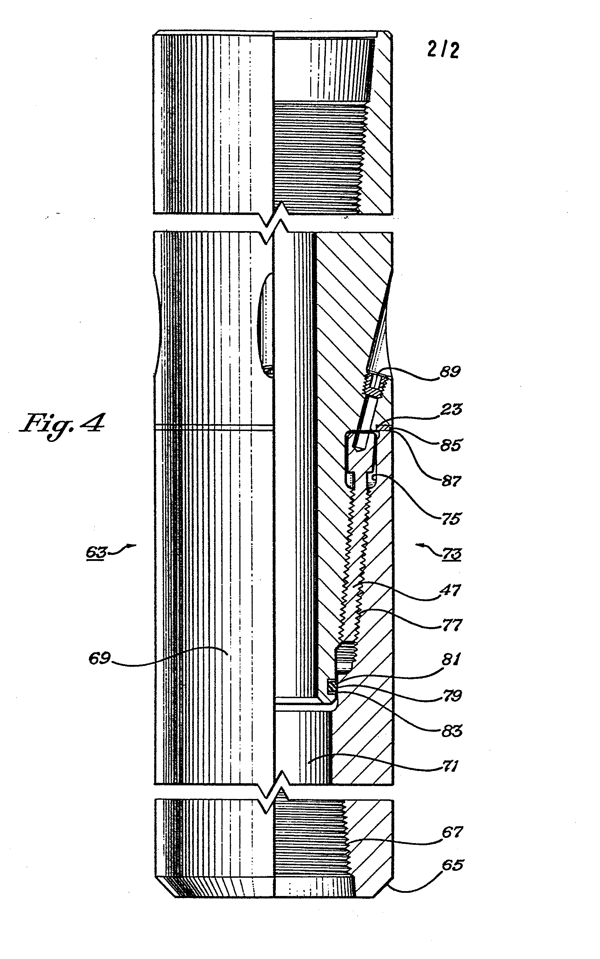

A sleeve 47 is mounted onto the pin connection 21. The preferred embodiment of the sleeve 47 is a split ring insert 47 as illustrated in Fig. 2. The insert 47 generally has the shape of a hollow frustrum, tapering inward from top to bottom. At the top of the insert 47, the inner diameter of the insert 47 is slightly larger than the diameter of the pin connection 21, and the outer diameter of the insert 47 is approximately equal to the diameter of the annular shoulder 23. On its interior surface, the insert has concentric grooves 49, which correspond to the concentric grooves 27 on the pin connection 21. The insert 47 has standard threads 51 on its outer surface. There are four dowel holes 53 spaced evenly in the upper surface 55 of the insert 47. These holes 53 correspond to the lower cylindrical sections 45 of the holes 39 in the pin member 11.

The insert 47 is split into two identical portions 57, 59, so that the insert 47 may be placed upon the pin connection 21, as illustrated in Fig. 3. Shot pins 61 fit through the holes 39 in the pin member 11, and extend downwardly into the dowel holes 53 in the split ring insert 47. These shot pins 61 hold the split ring insert 47 against rotational movement relative to the pin connection 21 during the makeup of the torque limiter sub.

The preferred embodiment of the box member 63 is illustrated in Fig. 4. The box member 63 has a beveled lower end 65, and interior threads 67 for connection to the upper end of a section of drill pipe (not shown). The outer surface 69 of the box member 63 is the same diameter as the outer surface 17 of the pin member 11 and the outer surface of the drill string. The bore 71 of the box member 63 is slightly larger than the bore 19 through the pin member. At the upper end of the box member 63 is a box connection 73. At the top of the box connection 73 is a cylindrical section 75, which has an interior diameter slightly larger than the exterior diameter of the split ring insert 47. Below the cylindrical section 75 the box connection 73 has standard interior threads 77. The threads 77 taper slightly inward from top to bottom. Below the threads 77, the box connection 73 has another cylindrical section 79, which has an interior diameter slightly larger than the exterior diameter of the nose 33 on the pin connection 21. An o-ring 81 and a pair of backup rings 83 are located in the seal groove 37 between the pin connection 21 and the box connection 73. A shoulder ring 85 fits between the pin connection 21 and a makeup shoulder 87 on the top of the box connection 73. The shoulder ring 85 is located radially outward from the annular shoulder 23 on the pin connection 21 and acts as a makeup shoulder for the pin connection 21. A dry seal plug 89 is inserted into the threaded section 43 of each hole 39 in the pin member 11, after the torque limiter sub has been made up.

In operation, several pre-set torque limiter subs are placed between pairs of pipe sections in the drill string in order to prevent damage to the tool joints in the drill string due to excessive torque. The pin member 11 is connected to the lower end of a pipe section and the box member 63 is connected to the upper end of a second pipe section. The split ring insert 47 is placed over the pin connection 21, so that the annular grooves 49 on the insert 47 correspond to the concentric grooves 27 on the pin connection 21. Shot pins 61 are inserted through the holes 39 in the pin member 11 into the dowel holes 53 in the split ring insert 47. The o-ring 81 and a pair of back up rings 83 are then placed within the seal groove 37 in the pin connection 21. The shoulder ring 85 is placed over the pin connection 21 and positioned around the annular shoulder 23. The pre-set torque limiter sub is then prepared for makeup.

While the shot pins 61 hold the insert 47 against rotation, the box member 63 and the pin member 11 are threaded together. The threads 77 on the box connection 73 mate with the threads 51 on the insert 47. The torque which is applied to the torque limiter sub in order to makeup the members, is known as the "makeup torque". Once the pin member 11 and the box member 63 have been completely made up, the makeup shoulders 85,87 contact. The shot pins 61 are then removed from the holes 39, and dry seal plugs 89 are inserted into the threaded sections 43 of the holes 39.

If the torque on the drill string becomes excessive, the split ring insert 47 and the pin connection 21 will slip along the makeup shoulders 85, 87 and the concentric grooves 27,49. The torque at which slippage will occur is slightly less than the makeup torque. When the torque on the drill string is returned to below the level at which slippage occurs, slippage will no longer occur and the drill string will be able to continue its rotary drilling. Thus, it is unnecessary to remove the drill string from the hole after an excessive torque has been reached.

The connection means for connecting the box connection 73 and the pin connection 21 together is the threads 51, 77, the split ring insert 47, and the concentric grooves 27,49. The connection means for connecting the sleeve 47 to the pin connection 21 is the concentric grooves 27, 49. The makeup shoulders 85, 87 act as a torque limiting means for allowing the box member 63 and the pin member 11 to rotate with respect to one another whenever the torque on the sub exceeds a selected amount, and for holding the box member 63 and the pin member rigidly together whenever the torque on the sub is below the selected amount. In the preferred embodiment, the compression means for maintaining the pressure between the makeup shoulders is the concentric grooves 27, 49.

While the invention has been shown in only one of its forms, it should be apparent to those skilled in the art that it is not so limited but is susceptible to various changes and modifications without departing from the spirit thereof.

CLAIMS

1.      A torque limiter sub, comprising: a box member
having a box connection at one end; a pin member having
a pin connection at one end; connection means for connec-
ting the box connection and the pin connection together;
and torque limiting means for allowing the box member and
the pin member to rotate with respect to one another whenever the torque on the sub exceeds a selected amount, and
for holding the box member and the pin member rigidly together whenever the torque on the sub is below the selected amount.

2.      A torque limiter sub, according to claim 1, com-
prising: a sleeve threaded to a selected one of the box
connection and pin connection; and wherein said connection
means connect the sleeve to the other of the box connection and pin connection.

3.      A torque limiter sub according to claim 2, wherein said connection means comprise a makeup shoulder on
said box member and a makeup shoulder said pin member which
contacts the makeup shoulder in the box member to hold
the box member and the pin member rigidly together whenever the torque on the sub is below a selected amount,
but to allow the box member and the pin member to rotate
with respect to one another whenever the torque on the
sub exceeds the selected amount.

4.      A torque limiter sub, according to claim 3, wherein said connection means comprise compression means for
maintaining the pressure between the makeup shoulders.

5.      A torque limiter sub  according to claim 1, wherein comprising: said connection means comprises threads on
a selected one of the box connection and the pin connection
and concentric grooves on the other connection, and, a
split ring insert located between the box connection and
the pin connection, said insert having threads and concentric grooves to correspond to the box connector and
the pin connection; and retention means for holding the
insert against rotational movement along the concentric
grooves during makeup of the torque limiter sub.

6.      A torque limiter sub according to claim 5, wherein said pin member has connection means at the other end for connecting the pin member to a section of drill pipe, said pin connection having said concentric grooves around the outer surface; said box member has connection means at the other end for connecting the box member to a section of drill pipe, said box connection having said threads on the inner surface; and said insert has concentric grooves on the inner surface of the insert to correspond to the grooves on the pin connection and has threads on the outer surface of the insert to correspond to threads on the box connection.

7. A torque limiter sub according to claim 6, wherein said retention means comprises a shot pin for holding the insert against rotational movement relative to the pin connection during makeup of the torque limiter sub.

8. A torque limiter sub according to claim 6, wherein said retention means comprises a plurality of removable shot pins, inserted through holes in the pin member into the split ring insert, for holding the insert against rotational movement relative to the pin connection during makeup of the torque limiter sub.

9. A torque limiter sub according to claim 8, wherein said split ring insert is generally in the shape of a hollow frustrum, said holes are evenly spaced around the circumference of the pin member; and a plurality of dry seal plugs is provided for sealing the holes in the pin member after the shot pins have been removed.

*Fig.2*

*Fig.1*

*Fig.3*

2/2

*Fig.4*

89
23
85
87
75
73
47
77
81
79
83
71

63

69

67
65